(19) Europäisches Patentamt
European Patent Office
Office européen des brevets

(11) **EP 4 381 361 B1**

(12) **EUROPÄISCHE PATENTSCHRIFT**

(45) Veröffentlichungstag und Bekanntmachung des Hinweises auf die Patenterteilung:
**27.11.2024 Patentblatt 2024/48**

(21) Anmeldenummer: **23751014.4**

(22) Anmeldetag: **02.08.2023**

(51) Internationale Patentklassifikation (IPC):
**G05B 23/02** *(2006.01)*    **G05B 19/402** *(2006.01)*
**G05B 19/406** *(2006.01)*    **B29C 45/76** *(2006.01)*

(52) Gemeinsame Patentklassifikation (CPC):
**G05B 23/0254; G05B 19/406; B29C 45/768;**
B29C 2945/76083; B29C 2945/76568;
G05B 2219/45244

(86) Internationale Anmeldenummer:
**PCT/EP2023/071391**

(87) Internationale Veröffentlichungsnummer:
**WO 2024/033178 (15.02.2024 Gazette 2024/07)**

(54) **VERFAHREN, VORRICHTUNG UND COMPUTERPROGRAMM ZUR FEHLERERKENNUNG EINER IST-POSITION EINER ACHSE EINER MASCHINE**

METHOD, DEVICE, AND COMPUTER PROGRAM FOR DETECTING AN ERROR IN THE ACTUAL POSITION OF AN AXLE OF A MACHINE

PROCÉDÉ, DISPOSITIF ET PROGRAMME INFORMATIQUE POUR LA DÉTECTION D'UNE ERREUR DANS LA POSITION RÉELLE D'UN ESSIEU D'UNE MACHINE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **12.08.2022 DE 102022120407**

(43) Veröffentlichungstag der Anmeldung:
**12.06.2024 Patentblatt 2024/24**

(73) Patentinhaber: ARBURG GmbH + Co KG
**72290 Loßburg (DE)**

(72) Erfinder: **SUHM, Patrick**
**77723 Gengenbach (DE)**

(74) Vertreter: **RPK Patenanwälte Reinhardt und Kaufmann**
**Partnerschaft mbB (Pforzheim)**
**Grünstraße 1**
**75172 Pforzheim (DE)**

(56) Entgegenhaltungen:
EP-A1- 1 927 906     EP-A1- 3 667 446
DE-A1- 102011 116 153     DE-T2- 69 419 819
DE-T5- 10 394 201

**Beschreibung**

Die vorliegende Erfindung betrifft ein Verfahren zur Fehlererkennung einer Ist-Position einer Achse einer Maschine zur Handhabung und/oder Verarbeitung von plastifizierbaren Materialien, insbesondere einer Spritzgießmaschine oder einer Formgebungsmaschine nach dem Oberbegriff des Anspruchs 1, eine Fehlererkennungsvorrichtung nach dem Oberbegriff des Anspruchs 14 sowie ein Computerprogrammprodukt nach dem Oberbegriff des Anspruchs 15.

Der Begriff "plastifizierbares Material", wie er in dieser Anmeldung verwendet wird, ist weit zu verstehen und umfasst insbesondere, aber nicht nur, neben Kunststoffen oder auch Silikon oder anderen thermoplastischen und/oder elastomeren Werkstoffen z.B. keramische, metallische und/oder pulverige Massen ebenso wie Papier, Cellulose, Stärke, Kork, usw. sowie auch Mischmaterialen zwischen derartigen plastifizierbaren Materialien. Grundsätzlich kann es sich dabei auch um bereits zuvor plastifizierte Materialien oder auch plastische Massen handeln, die nach dem Ausbringen selbsttätig oder unter Einsatz von Hilfsmitteln aushärten. Der Begriff umfasst auch Rezyklate und Compounds.

Beim und/oder zum Betrieb von Maschinen aller Art, z.B. von industriellen Maschinen, elektrischen Maschinen und/oder Formgebungsmaschinen können Achsen, zum Beispiel Tauch-, Positionier- oder Linearachsen vorgesehen sein, welche verschiedene Aufgaben übernehmen. Beispielsweise kann bei einer Maschine zur Handhabung und/oder Verarbeitung von plastifizierbaren Materialien, insbesondere einer Spritzgießmaschine oder einer Formgebungsmaschine, insbesondere zur Handhabung von Spritzgießerzeugnissen, eine Achse, zum Beispiel eine Tauch-, Positions- oder Linearachse vorgesehen sein. Beispielsweise kann mit der Achse das fertige Spritzteil aus der Spritzgussform entnommen werden. Zum Antrieb der Achse kann dabei beispielsweise ein Riemenantrieb für eine translatorische Bewegung der Achse in eine Richtung verwendet werden. Während des Betriebs der Maschine und/oder des Antriebs sowie einer Bewegung der Achse kann es jedoch zu Fehlern bzw. Abweichungen z.B. beim Verfahren der Achse kommen, wobei eine Differenz zwischen der Soll- und der Ist-Position z.B. als Schleppfehler auftritt. Ebenfalls kann es aufgrund einer Überlast zu einem Fehler oder im schlimmsten Fall zu einem Ausfall des Antriebs und somit zum Ausfall der gesamten Maschine kommen.

Bekannt sind im Stand der Technik Verfahren zur Überwachung von Schleppfehlern sowie Verfahren zum Erkennen einer Überlast.

In der DE 10 2008 045 330 A1 ist ein Verfahren zum dynamischen Erkennen eines Fehlbetriebs einer Lasthubeinrichtung offenbart, wobei mittels eines Kraftsensors ein Signal überwacht wird, das proportional zu einer durch das Lastaufnahmemittel ausgeübten Kraft ist. Wird ein Anstieg des Signals erfasst, wird überprüft, ob eine nominelle Überlastschwelle überschritten wird und ein entsprechendes Abschaltsignal erzeugt.

In der US 2018/0210436 A1 ist ein Verfahren und ein System zur Prozessüberwachung eines industriellen Prozesses offenbart, wobei ein integrierter digitaler Zwilling der Anlage, der von einem Computersystem implementiert wird, bereitgestellt wird. Ein Aggregationsalgorithmus verwendet Modelle, die eine Vielzahl von miteinander in Beziehung stehenden statischen Modellen für die industrielle Anlage umfassen, einschließlich eines Anlagenmodells, das Geräte und Systeme in der industriellen Anlage beschreibt, Sensoren, die mit der Verarbeitungsausrüstung gekoppelt sind, und eines Flussdiagrammmodells sowie dynamischer Modelle der industriellen Anlage. Der Aggregationsalgorithmus, der die Ausgaben der statischen Modelle und des dynamischen Modells verwendet, erzeugt eine aggregierte Ansicht, die Leistungswarnungen für mindestens eine der Prozessausrüstungen und den industriellen Prozess auf der Grundlage der aktuellen Leistung des industriellen Prozesses enthält.

Die DE 10 2011 116 153 A1 zeigt ein Verfahren zur Regelung einer Antriebseinheit einer Spritzgießmaschine mit zumindest einem ersten und einem zweiten Motor, durch die ein Teil der Spritzgießmaschine angetrieben wird. Durch eine Regeleinheit wird die Motordrehzahl des ersten Motors und die Motordrehzahl des zweiten Motors geregelt. Die Antriebseinheit weist mehre Positionssensoren auf, die Positionen des ersten und zweiten Motors messen und entsprechende Signale ausgeben. In einem Speicher werden die detektierten Positionen gespeichert, wobei von der Regeleinheit in einem ersten Schritt in Abhängigkeit der gespeicherten Positionen ein fiktiver Positionssollwert errechnet wird. Dann wird die jeweilige Abweichung der detektierten Positionen vom fiktiven Positionssollwert errechnet und anschließend werden von der Regeleinheit in Abhängigkeit der ermittelten Abweichungen korrigierte Drehzahlstellsignale an die Motoren ausgegeben. Dabei verwendet das Verfahren zur Fehlererkennung eine Ist-Position einer Achse mit einer Abweichung der detektierten Position, wobei ein Modell der Achse mit wenigstens einem Modellparameter bereitgestellt wird.

Die EP 3 617 826 A1 offenbart ein Management-Überwachungssystem mit Echtzeit-Erfassungsvorrichtungen und Sensoren zum Erfassen des Zustands einer Zielvorrichtung und eines Befehls, der von einer zentralen Steuervorrichtung ausgegeben wird, die einen Steuerbefehl in die Zielvorrichtung eingibt, und eine Management-Überwachungsvorrichtung zum Erfassen von Informationen von den Echtzeit-Erfassungsvorrichtungen. Die Management-Überwachungsvorrichtung weist eine Analyseeinheit zum Simulieren des Zustands der betreffenden Vorrichtung unter Verwendung von Modellen der betreffenden Vorrichtung und der zentralen Steuervorrichtung auf. Weiterhin ist eine Bewertungseinheit zum Vergleichen des von der Analyseeinheit berechneten Ergebnisses mit den von den Echtzeit-Erfassungsvorrichtungen erfassten Informationen und zum Bewerten vorgesehen, ob eine Fehlfunktion in der betreffenden Vorrichtung aufgetreten ist.

In der EP 3 667 446 A1 ist ein Fehlerdiagnosesystem mit einem Instrument, z. B einem Sensor, das so konfiguriert ist, dass es eine Messung eines Messwerts bezüglich des Verhaltens eines Diagnoseziels durchführt, und mit einer Fehlerdiagnosevorrichtung offenbart, die ein Modell des Diagnoseziels aufweist und so konfiguriert ist, dass sie eine Simulation auf der Grundlage des Modells durchführt. Die Fehlerdiagnosevorrichtung ist so konfiguriert, dass sie einem Benutzer einen Vorschlag zur Messung eines neuen Parameters in Bezug auf das Diagnoseziel anbietet unter der Bedingung, dass eine Differenz zwischen einem Ergebnis der Simulation und dem gemessenen Wert größer als ein vorbestimmter Fehlerbereich ist, aber die Differenz eine unzureichende Grundlage liefert, um zu bestimmen, ob das Diagnoseziel einen Fehler hat oder nicht.

Die EP 3 540 546 A1 offenbart eine Vorrichtung zur Unterstützung der Fehlervorhersage, ein Verfahren zur Unterstützung der Fehlervorhersage und ein Programm zur Unterstützung der Fehlervorhersage, durch das ein Benutzer auf einfache Weise eine Anomalie in Zeitreihendaten in Bezug auf ein Gerät erkennen kann. Die Fehlervorhersage-Unterstützungsvorrichtung umfasst einen Differenzerfassungsteil, der tatsächliche Maschinenzeitreihendaten, die sich auf die Steuerung einer Vorrichtung beziehen, und Simulationszeitreihendaten, die sich auf die Steuerung der simulierten Vorrichtung beziehen, berücksichtigt und erfasst eine Differenz zwischen den tatsächlichen Maschinenzeitreihendaten und den Simulationszeitreihendaten.

Nachteilig bei dem im Stand der Technik verwendeten Verfahren ist, dass diverse Fehlerfälle wie zum Beispiel ein Riemenriss, ein Lagerschaden oder losgerüttelte Anbauteile nur indirekt, sehr spät oder gar nicht erkannt werden.

Ausgehend von diesem Stand der Technik liegt der vorliegenden Erfindung die Aufgabe zugrunde, ein vorteilhaft sicheres, effizientes und verlässliches Verfahren zur Fehlererkennung einer Ist-Position einer Achse einer Maschine zur Handhabung und/oder Verarbeitung von plastifizierbaren Materialien, insbesondere einer Spritzgießmaschine oder einer Formgebungsmaschine zur Verfügung zu stellen.

Diese Aufgabe wird durch ein Verfahren zur Fehlererkennung einer Ist-Position einer Achse mit den Merkmalen des Anspruches 1 sowie durch eine Fehlererkennungsvorrichtung mit den Merkmalen des Anspruchs 14 sowie durch ein Computerprogrammprodukt mit den Merkmalen des Anspruchs 15 gelöst.

Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Die Idee des erfindungsgemäßen Verfahrens besteht darin ein dynamisches Modell des Antriebsstrangs der Achse zu verwenden, um die Antriebsmesswerte zu validieren.

Das Verfahren zur Fehlererkennung einer Ist-Position einer Achse, wie zum Beispiel einer elektrischen, hydraulischen, pneumatischen Achse, einer Tauch-, Positionier- und/oder Linearachse einer Maschine zur Handhabung und/oder Verarbeitung von plastifizierbaren Materialien, insbesondere einer Spritzgießmaschine oder einer Formgebungsmaschine, weist die folgenden Schritte auf.

Zunächst wird wenigstens ein Modell der Achse, bevorzugt ein Dynamikmodell der Achse, mit wenigstens einem Modellparameter bereitgestellt. Beispielsweise kann für die Achse ein Modell des Antriebsstrangs bereitgestellt werden.

Als ein Modellparameter wird beispielsweise in der Mathematik eine Variable eines mathematischen Modells genannt, die gemeinsam mit anderen Variablen im Modell auftritt, aber von anderer Qualität ist. Man spricht auch davon, dass ein Modellparameter beliebig, aber fest ist. Er unterscheidet sich damit von einer Modellkonstanten dadurch, dass der Modellparameter nur für einen gerade betrachteten Fall konstant ist, für den nächsten Fall aber variieren kann.

Der Modellparameter umfasst Parameter, welche mit dem Modell verknüpft sind und das Modell näher beschreiben. Der Modellparameter kann beispielsweise ein Skalar, ein Vektor oder ein Tensor mit verschiedenen Parametern sein. Beispielsweise kann der Modellparameter ein Trägheitsmoment, eine Dämpfung, z.B. eine viskose Dämpfung oder ein konstantes Störmoment, wie zum Beispiel die Gravitation umfassen. Prinzipiell sind aber je nach verwendetem Modell auch andere Modellparameter möglich.

Das Modell kann verschiedene Formeln, Beziehungen, Gleichungen und/oder Parameter aufweisen. Weiter kann das Modell wenigstens einen Parameter, einen Modelleingang und/oder einen Modellausgang aufweisen. Z.B. kann das Modell drei Parameter, einen Modelleingang, z.B. einen vektoriellen Modelleingang und einen Modellausgang, z.B. einen skalaren Modellausgang aufweisen.

Es wird wenigstens eine Modelleingangs-Messgröße, z.B. ein Winkel, eine Winkelbeschleunigung und/oder eine Winkelgeschwindigkeit und wenigstens eine Modellausgangs-Messgröße der Achse, jeweils zum Beispiel eine Drehzahl, ein Drehmoment, ein Motordrehmoment, eine Winkelgeschwindigkeit, eine Leistungsaufnahme, ein Strom und/oder ein Druck erfasst. Die wenigstens eine Modelleingangs-Messgröße wird für den Modelleingang des Modells und die wenigstens eine Modellausgangs-Messgröße wird für den Modellausgang des Modells erfasst. Prinzipiell kann es sich dabei jeweils um dieselbe Messgröße, z.B. den Winkel oder die Winkelgeschwindigkeit handeln, wobei sich bevorzugt die Messgrößen voneinander unterscheiden. Die Erfassung kann beispielsweise mit entsprechenden Sensoren bzw. einer entsprechenden Sensorik an der Achse und/oder der Maschine erfolgen. Die wenigstens eine Modelleingangs-Messgröße und/oder Modellausgangs-Messgröße kann auf verschiedene Arten, z.B. als ein Skalar, ein Vektor oder ein Tensor dargestellt und/oder verwendet werden. Beispielsweise kann die Modelleingangs-Messgröße als ein Messvektor, welcher z.B. die Winkelgeschwindigkeit und/oder die Ableitung der Winkelgeschwindigkeit aufweist, und die Modellausgangs-Messgröße als ein Skalar, z.B. das Motordrehmoment dargestellt und/oder verwendet werden.

Weiter erfolgt wenigstens eine Schätzung des wenigstens einen Modellparameters des wenigstens einen Modells. Durch die Schätzung wird eine genäherte Bestimmung des Modellparameters durchgeführt. Die Schätzung kann bevorzugt durch statistisch-mathematische Methoden erfolgen, wie z.B. mit einer Methode der "kleinsten Quadrate". Der Modellparameter wird damit so geschätzt, dass der quadratische Fehler zwischen dem Modellausgang und der Modellausgangs-Messgröße minimal wird. Beispielsweise beschreibt die später gezeigte Formel 5 eine Methode der kleinsten Quadrate, wobei Formel 6 eine analytische Lösung von Formel 5 angibt und Formel 7 wiederum eine rekursive Form von Formel 6 angibt. Die Schätzung des wenigstens einen Modellparameters entspricht in diesem Bild einem Anwenden von Formel 7 bzw. Formel 8. In Formel 7 wird der Modellparameter, z.B. rekursiv geschätzt bzw. angepasst und entsprechend aktualisiert. Weiter kann die Schätzung bzw. Anpassung bevorzugt zeitabhängig, z.B. in jedem Takt der Maschinensteuerung erfolgen, sodass sich der Modellparameter entsprechend ständig ändert und aktualisiert wird. Beispielsweise kann der Modellparameter bei Maschinenstart mit Null initialisiert werden und in einer bestimmten Zeitspanne, z.B. in einem niedrigen Millisekunden-Takt von der Maschinensteuerung über die später gezeigte Formel 7 angepasst werden. Vorteilhaft ergibt sich so eine Kompensation von Verschleiß- und/oder Alterungsphänomenen, die in einem industriellen Umfeld erforderliche Robustheit wird gewährleistet und es werden Fehlauslösungen vermieden. Bevorzugt wird für die Schätzung des wenigstens einen Modellparameters die wenigstens eine Modelleingangs-Messgröße und/oder die wenigstens eine Modellausgangs-Messgröße verwendet. Werden z.B. für die Schätzung eine Winkelgeschwindigkeit, eine Winkelbeschleunigung und ein Drehmoment verwendet, so ergeben sich als Modellparameter z.B. ein Trägheitsmoment, eine Dämpfung und/oder ein Störmoment. Weiter bevorzugt wird für die Schätzung die Formel 5, 6, 7 und/oder 8 verwendet.

Mittels des wenigstens einen geschätzten Modellparameters des Modells und der erfassten wenigstens einen Modelleingangs-Messgröße, z.B. dem Winkel, der Winkelgeschwindigkeit und/oder der Winkelbeschleunigung, wird wenigstens eine zu erwartende Messgröße, z.B. ein zu erwartendes Drehmoment simuliert. Beispielsweise kann die später gezeigte Formel 1 die Simulation der zu erwartenden Messgröße beschreiben.

Im Anschluss erfolgt ein Vergleich der Abweichung der wenigstens einen zu erwartenden Messgröße von der erfassten wenigstens einen Modellausgangs-Messgröße mit wenigstens einem Schwellenwert. Prinzipiell könnte jedoch auch die zu erwartende Messgröße direkt mit der (erfassten) Modellausgangs-Messgröße verglichen werden. Im Vergleich beispielsweise zu einer reinen Überlast- oder Beschleunigungsüberwachung ergibt sich der Vorteil, dass sich zum Beispiel das Ist-Drehmoment und das simulierte Drehmoment in einem Kollisionsfall, z.B. bei einer Achskollision, gegenläufig verhalten, was eine frühere Erkennung bei gleichem Schwellenwert verglichen mit anderen Verfahren erlaubt. Eine Beschleunigungs- oder Ruck-überwachung hat zudem den Nachteil, dass Kollisionen mit weniger steifen Objekten nicht erkannt werden.

Bei einer Überschreitung des Schwellenwerts wird wenigstens eine Aktion ausgeführt, z.B. kann ein Warnsignal ausgegeben werden, ein Steuersignal für die Maschine generiert werden und/oder die Maschine in einen sicheren Zustand überführt werden.

Bevorzugt unterscheidet sich die wenigstens eine Modelleingangs-Messgröße von der wenigstens einen Modellausgangs-Messgröße. Es wird somit bevorzugt wenigstens eine Messgröße als Modelleingangs-Messgröße und wenigstens eine weitere Messgröße als Modellausgangs-Messgröße erfasst. Beispielsweise kann es sich bei der Modelleingangs-Messgröße um einen Winkel, eine Winkelgeschwindigkeit und/oder eine Winkelbeschleunigung und bei der Modellausgangs-Messgröße um ein Motordrehmoment handeln. Beispielsweise wird zur Simulation der wenigstens einen zu erwartenden Messgröße die Modelleingangs-Messgröße, z.B. der Winkel, die Winkelgeschwindigkeit und/oder die Winkelbeschleunigung der Achse, erfasst und zum Vergleich der Abweichung der zu erwartenden Messgröße mit dem Schwellenwert die Modellausgangs-Messgröße, z.B. das Motordrehmoment, der Strom oder die Leistungsaufnahme der Achse, erfasst. Vorteilhaft ergibt sich so eine verlässliche, präzise und robuste Fehlererkennung.

Das Verfahren kann zudem weiter vorteilhaft verwendet werden, um strukturelle Änderungen festzustellen. Beispielsweise kann so ein Riemenriss frühzeitig erkannt werden. Bei Achsen, die über einen Riemen angetrieben werden, ist die Riemensteifigkeit im Normalfall vernachlässigbar hoch. Das heißt beispielsweise, dass es zulässig sein kann, das Modell so anzusetzen, dass nicht zwischen Motorträgheit und Achsträgheit unterschieden wird. Eine deutliche Verringerung der Riemensteifigkeit, zum Beispiel durch Verschleiß, führt dazu, dass das Modell nicht mehr zum realen System passt, da nun ein weiterer bzw. nicht modellierter Freiheitsgrad vorhanden ist. Folglich kann beispielsweise der reale Drehmomentverlauf nicht mehr abgebildet werden und die Fehlererkennung löst aus. Auch ist es vorteilhaft möglich, dass ein Lagerschaden erkannt wird, da beispielsweise der Drehmomentverlauf ab einer gewissen Schwere des Schadens nicht mit dem angesetzten Modell abgebildet werden kann. Ebenfalls können vorteilhaft Achsteile, die sich aufgrund von Vibrationen von der restlichen Achse ablösen, erkannt werden. Da sich z.B. elektrische Anomalien wie Kurzschlüsse oder Bauteileffekte beispielsweise auch im Drehmomentmesswert der Maschine niederschlagen, kann vorteilhaft auch dies vom Verfahren erkannt werden.

Das Verfahren kann auch bei verschiedenen Achsen, beispielsweise bei hydraulischen und/oder pneumatischen Achsen zur Anwendung kommen, welche z.B. durch einen Zylinder angetrieben werden. Eine Messgröße könnte dabei beispielsweise der Zylinderdruck, bevorzugt multipliziert mit Kolbenfläche, darstellen. Wenn der erfasste Druck nicht zum simulierten Druck passt, liegt eine Anomalie vor.

Vorteilhaft für eine schnelle und einfache Erfassung der wenigstens einen Modelleingangs-Messgröße und/oder der wenigstens einen Modellausgangs-Messgröße wird bevorzugt wenigstens ein Signalabschnitt der wenigstens einen Modelleingangs-Messgröße und/oder der wenigstens einen Modellausgangs-Messgröße erfasst. Beispielsweise kann als Signalabschnitt, zum Beispiel die Drehzahl, das Drehmoment, das Motordrehmoment, die Leistungsaufnahme, der Strom oder der Druck aufgetragen über der Zeit oder dem Ort mittels entsprechender Sensoren erfasst werden. Vorteilhaft kann so über den Differenzenquotienten die Ableitung der wenigstens einen Modelleingangs-Messgröße und/oder Modellausgangs-Messgröße gebildet werden.

Bevorzugt wird durch wenigstens eine mathematische Operation, zum Beispiel eine Differentiation, eine Ableitung und/oder eine Integration wenigstens ein anderer Signalabschnitt der wenigstens einen Modelleingangs-Messgröße und/oder Modellausgangs-Messgröße erzeugt. Beispielsweise kann als Modelleingangs-Messgröße die Winkelgeschwindigkeit erfasst werden und durch die Ableitung der Winkelgeschwindigkeit nach der Zeit eine entsprechende Beschleunigung erhalten werden. Vorteilhaft ergibt sich eine genauere Fehlererkennung, da mehrere Größen in die Fehlererkennung eingehen.

Für eine vorteilhafte Kompensation von Verschleiß- und/oder Alterungsphänomenen erfolgt bevorzugt wenigstens eine Anpassung des wenigstens einen Modells und/oder des wenigstens einen Modellparameters. Weiter vorteilhaft wird dadurch die in einem industriellen Umfeld erforderliche Robustheit gewährleistet und es werden Fehlauslösungen vermieden. Beispielsweise kann die Anpassung anhand der später gezeigten Formel 7 erfolgen. In Formel 7 wird der Modellparameter, z.B. rekursiv angepasst und entsprechend aktualisiert. Weiter kann die Anpassung bevorzugt zeitabhängig, z.B. in jedem Takt der Maschinensteuerung erfolgen, sodass sich der Modellparameter entsprechend ständig ändert und aktualisiert wird. Beispielsweise kann der Modellparameter bei Maschinenstart mit Null initialisiert werden und in einer bestimmten Zeitspanne, z.B. in einem niedrigen Millisekunden-Takt von der Maschinensteuerung über die später gezeigte Formel 7 angepasst werden.

Bevorzugt hängt das wenigstens eine Modell linear vom wenigstens einen Modellparameter ab. Vorteilhaft ermöglicht die lineare Abhängigkeit das Aufstellen eines konvexen Optimierungsproblems zur Schätzung des Modellparameters. Weiter bevorzugt wird Linearität nur bezüglich des Modellparameters gefordert. Das heißt, es können vorteilhaft auch nichtlineare Effekte abgebildet werden. Ein Beispiel wäre eine rotative Achse, die orthogonal auf dem Gravitationsvektor steht und deren Beladung nicht symmetrisch zur Drehachse angeordnet ist. Eine solche Achse kann im statischen Fall ein Drehmoment aufbringen, was nichtlinear vom Drehwinkel abhängt. Ein Messvektor kann in diesem Fall beispielsweise so aussehen: $x = [\omega', \omega, \sin(\phi), 1]^T$, wobei $\omega$ die Winkelgeschwindigkeit der Achse und $\phi$ den Winkel der Achse darstellt. Der Messvektor kann beispielsweise für den Modelleingang verwendet werden.

Für eine vorteilhaft erhöhte Sicherheit und einfache und schnelle Nachverfolgung eines Fehlers wird bevorzugt bei einer Überschreitung des wenigstens einen Schwellenwerts wenigstens eine Diagnosedatei erzeugt, welche zum Beispiel die zeitlichen Verläufe der Messgrößen, der Signalabschnitte und/oder der Parameter umfasst. Die Diagnosedatei kann zudem noch weitere Informationen bezüglich der Maschine oder des aufgetretenen Fehlers umfassen und beispielsweise direkt auf der Maschine oder in einem Netzwerk verfügbar gemacht werden.

Für eine vorteilhaft sichere und zuverlässige Schätzung des wenigstens einen Modellparameters wird bevorzugt wenigstens eine Überschreitung einer kritischen Achsgeschwindigkeit der Achse überprüft.

Weiter bevorzugt wird die Schätzung des wenigstens einen Modellparameters erst bei der Überschreitung der kritischen Achsgeschwindigkeit der Achse aktiviert. Unterhalb dieser Geschwindigkeit kann mit dem verwendeten Modell nur schwer eine zuverlässige Schätzung stattfinden, da Nichtlinearitäten, zum Beispiel Rastkraft, Reibung oder niederfrequente Schwingungen dominant sind. Bewegt sich beispielsweise die Achse zu langsam, kann die Schätzung nicht ausgeführt werden. Die Fehlererkennung kann prinzipiell jedoch auch weiter aktiv sein.

Um vorteilhaft Fehlauslösungen und/oder Nicht-Auslösungen der Fehlererkennung zu vermeiden, wird bevorzugt wenigstens eine Modellsicherheit des wenigstens einen Modells der Achse überprüft. Beispielsweise kann die Modellsicherheit mittels wenigstens eines Unsicherheitsparameters beschrieben werden. Bei der Überprüfung kann beispielsweise ein Wert des Unsicherheitsparameters überprüft werden. Beträgt der Wert des Unsicherheitsparameters z.B. null oder im Wesentlichen null, ist eine ausreichende Modellsicherheit gewährleistet. Ist die Modellsicherheit nicht gewährleistet, kann es zu Fehlauslösungen und/oder Nicht-Auslösungen kommen, da das Modell dann die Vorgänge nicht ausreichend genau abbilden würde. Bevorzugt wird die Überprüfung der wenigstens einen Modellsicherheit anhand der Bestimmung der Eigenwerte einer Kovarianzmatrix durchgeführt. Vorteilhaft ergeben sich so genauere und präzisere Ergebnisse.

Weiter bevorzugt wird die Fehlererkennung erst ab einer bestimmten Modellsicherheit aktiviert. Die Modellsicherheit gibt an, wie gut das Modell die Modellausgangs-Messgröße, vorhersagt. Sie kann beispielsweise bestimmt werden, indem die Eigenwerte der Kovarianzmatrix ausgerechnet werden. Je kleiner ein Eigenwert der Kovarianzmatrix, desto größer die Sicherheit des zugehörigen Modellparameters. Weiter kann die Modellsicherheit über einen Unsicherheitsparameter bzw. den Eigenwert beschrieben werden. Beispielsweise wird die Fehlererkennung erst unter einem Prozent Unsicherheit oder bei einem Unsicherheitsparameter im Wesentlichen von null aktiviert.

Bevorzugt kann die Kovarianzmatrix anfänglich als Diagonalmatrix mit Maximal-Eigenwerten initialisiert werden und/oder in wenigstens einem Zeitschritt, z.B. einem Steuerungstakt angepasst werden. Vorteilhaft ergibt sich so eine verlässliche Modellsicherheit bei überschaubarem Rechenaufwand. Beispielweise kann die Kovarianzmatrix anfänglich als eine Diagonalmatrix mit großen Maximal-Eigenwerten, z.B. über 100 initialisiert und/oder in wenigstens einem Zeitschritt angepasst werden. Große Eigenwerte führen zu starken Parameterkorrekturen, die anfänglich auch erwünscht sind, wenn die Parameter mit Null initialisiert werden. Z.B. kann das Modell für die Schätzung freigegeben werden, sobald alle Eigenwerte der Kovarianzmatrix unterhalb von einem Prozent ihres Maximalwertes, z.B. von 100 liegen.

Bevorzugt wird überprüft, ob die Schätzung des wenigstens einen Modellparameters für wenigstens eine kritische Zeit aktiv war. Vorteilhaft kann so die Unsicherheit des Modells vermindert werden, was zu einer verlässlichen Fehlererkennung führt. Die kritische Zeit gibt an, welche Zeit benötigt wird, um eine ausreichende Modellsicherheit zu gewährleisten. Beispielsweise kann eine kritische Zeit eine Zeitspanne von 200ms betragen.

Weiter bevorzugt wird die Fehlererkennung erst aktiviert, wenn die Schätzung des Modellparameters wenigstens für die kritische Zeit aktiv war. Beispielsweise kann die Fehlererkennung ab einer Schätzung des Modellparameters für wenigstens eine Zeitspanne von 200ms aktiviert werden.

Um vorteilhaft auf Veränderungen beispielsweise im Antriebstrang der Achse zu reagieren, wird bevorzugt das Modell und/oder der wenigstens eine Modellparameter an wenigstens eine Umgebungsbedingung, weiter bevorzugt an wenigstens eine neue Umgebungsbedingung, angepasst. Ist die Modellstruktur einmal festgelegt kann der Modellausgang, bei vorgegebenem Modelleingang, beeinflusst werden, indem z.B. die Modellparameter verändert werden. Es kann somit das Modell an die Umgebung angepasst indem die Modellparameter an die Umgebung angepasst werden. Vorteilhaft können so z.B. ein Arbeitspunktwechsel, Störungen oder Invarianzen des zu modellierenden Systems und/oder der Achse ausgeglichen werden.

Für eine vorteilhaft zuverlässige Fehlererkennung findet bevorzugt die Anpassung des Modells und/oder die Anpassung des wenigstens einen Modellparameters langsamer als die Fehlererkennung statt. Vorteilhaft können so Fehlauslösungen und/oder Nicht-Auslösungen vermieden werden. Beispielsweise kann die Modellanpassung um wenigstens eine Größenordnung oder um wenigstens eine Zehnerpotenz langsamer als die Fehlererkennung stattfinden. Würde die Modellanpassung schneller oder wesentlich schneller als die Fehlererkennung stattfinden, so wäre es z.B. nicht möglich, langsame Phänomene wie beispielsweise Lagerschäden zu erkennen.

Für eine vorteilhaft möglichst einfache und schnelle Schätzung des wenigstens einen Modellparameters erfolgt bevorzugt die Schätzung des wenigstens einen Modellparameters rekursiv und/oder wird für die Schätzung des wenigstens einen Modellparameters ein Recursive-Least-Squares-Algorithmus verwendet. Weiter vorteilhaft ist es somit nicht notwendig, die Messdaten in einem Speicher abzulegen, und es wird ein Zeitverzug aufgrund einer Befüllung einer Messmatrix und eines Ausgangsvektors vermieden. Außerdem wird durch die rekursive Schätzung vorteilhaft keine Matrixinversion benötigt. Prinzipiell kann aber auch eine nicht-rekursive Schätzung des Modellparameters erfolgen.

Bevorzugt wird für die Schätzung des wenigstens einen Modellparameters die wenigstens eine Modelleingangs-Messgröße und/oder die wenigstens eine Modellausgangs-Messgröße verwendet. Vorteilhaft ergibt sich so ein genauer und präziser Modellparameter. Wird beispielsweise als Modelleingangs-Messgröße ein Winkel, eine Winkelgeschwindigkeit und/oder eine Winkelbeschleunigung und als Modellausgangs-Messgröße z.B. ein Drehmoment verwendet, ergeben sich als Modellparameter z.B. ein Trägheitsmoment, eine Dämpfung und/oder ein Störmoment.

Auch wird die Aufgabe durch eine Fehlererkennungsvorrichtung gelöst, welche für eine einfache, effiziente und verlässliche Fehlererkennung eingerichtet, ausgeführt und/oder konstruiert ist, um das oben beschriebene Verfahren auszuführen.

Ebenfalls wird die Aufgabe durch ein Computerprogrammprodukt gelöst. Für eine einfache, effiziente und verlässliche Fehlererkennung ist das Computerprogramm Produkt mit einem Programmcode versehen, der auf einem computerlesbaren Medium gespeichert ist, zur Durchführung des oben beschriebenen Verfahrens.

Weitere Vorteile ergeben sich aus den Unteransprüchen und der nachfolgenden Beschreibung eines bevorzugten Ausführungsbeispiels. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Im Folgenden wird die Erfindung anhand eines in den beigefügten Figuren dargestellten Ausführungsbeispiels näher erläutert. Es zeigen:

Figur 1        eine schematische Darstellung einer Maschine mit einer Achse,
Figur 2        ein Blockdiagramm,

Figur 3a        ein Modell im Normalbetrieb,

Figur 3b        ein Modell bei einer Anomalie,

Figur 4a        ein geschätzter und gemessener Drehmomentverlauf im Normalbetrieb,

Figur 4b        ein geschätzter und gemessener Drehmomentverlauf im Anomalie-Fall,

Figur 5a - 5c   ein Einschwingverhalten der Modellparameter,

Figur 6         ein Ablaufdiagramm,

Figur 7         ein Blockdiagramm.

Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben, und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

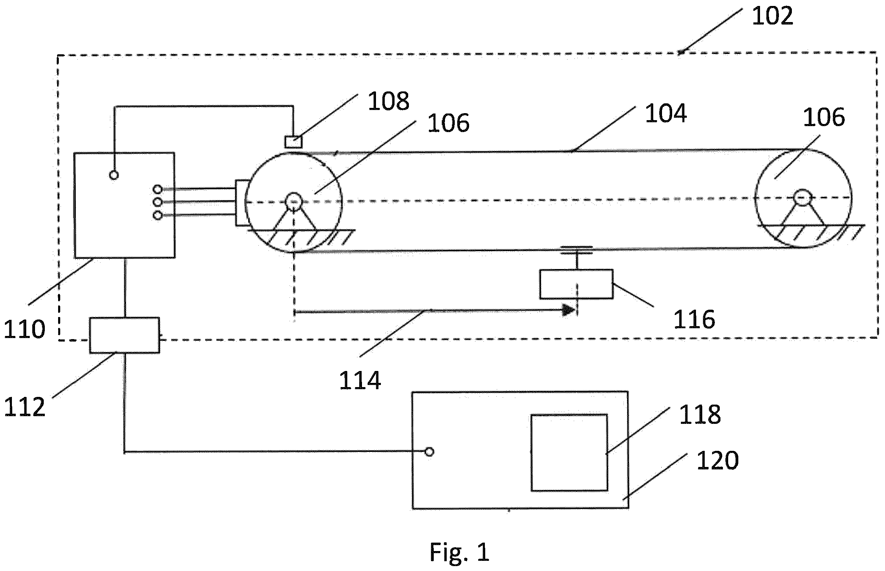

In Figur 1 ist eine Maschine 102 zur Handhabung und/oder Verarbeitung von plastifizierbaren Materialien, insbesondere eine Spritzgießmaschine oder eine Formgebungsmaschine, mit einer Achse 116, zum Beispiel einer Linearachse 116 schematisch dargestellt. Prinzipiell kann es sich bei der Achse z.B. um eine elektrische, hydraulische, pneumatische Achse, eine Tauch-, Positionier und/oder Linearachse handeln. Die Maschine 102 weist einen Riemen 104 und Umlenkrollen 106 auf, mit denen eine translatorische Bewegung der Achse 116 entlang einer Richtung 114 durchgeführt werden kann. Der Riemenantrieb kann über eine Antriebssteuerung 110 gesteuert werden, wobei eine Erfassungseinheit 108 wenigstens eine Messgröße der Achse 116 erfasst und an eine Kommunikationsschnittstelle 112 kommuniziert. Die Maschine 102 kann in Figur 1 mit einer Maschinensteuerung 120 mit einem Datenspeicher 118 gesteuert werden.

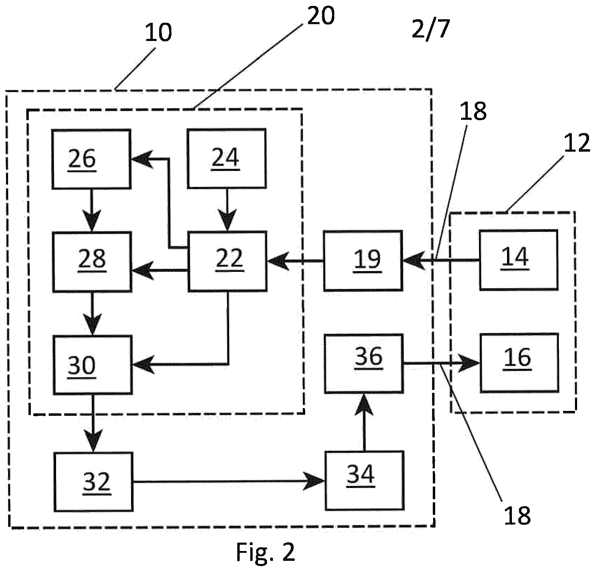

In Figur 2 ist ein Blockdiagramm eines Ausführungsbeispiels des erfindungsgemäßen Verfahrens dargestellt. In einem Block Modellaufbau 24 erfolgt die Bereitstellung wenigstens eines Modells einer Achse 12 mit wenigstens einem Modellparameter, wobei der Modellparameter zum Beispiel als ein Vektor mit den Parametern Trägheitsmoment, viskose Dämpfung und konstanten Störmomenten, zum Beispiel Gravitation dargestellt werden kann. Der Modellparameter kann auch als ein Skalar oder ein Tensor mit verschiedenen Parametern dargestellt werden. Mittels einer Sensorik 14 wird wenigstens eine Modelleingangs-Messgröße und wenigstens eine Modellausgangs-Messgröße der Achse 12 erfasst. Dabei kann es sich jeweils beispielsweise um eine Drehzahl, ein Drehmoment, ein Motordrehmoment, einen Druck, eine Leistungsaufnahme, ein Strom, ein Winkel, eine Winkelbeschleunigung und/oder eine Winkelgeschwindigkeit handeln. Die wenigstens eine Modelleingangs-Messgröße kann für einen Modelleingang des Modells und die wenigstens eine Modellausgangs-Messgröße kann für einen Modellausgang des Modells erfasst werden.

Die erfasste wenigstens eine Modelleingangs-Messgröße und wenigstens eine Modellausgangs-Messgröße werden über einen Bus 18, zum Beispiel einen Feldbus an eine Signalerfassung 19 einer Maschinensteuerung 10 übermittelt.

In einem weiteren bevorzugten Ausführungsbeispiel unterscheiden sich die wenigstens eine Modelleingangs-Messgröße und die wenigstens eine Modellausgangs-Messgröße voneinander. Es werden in diesem bevorzugten Ausführungsbeispiel somit wenigstens zwei unterschiedliche Messgrößen mit der Sensorik 14 erfasst. Beispielsweise können jeweils eine Drehzahl, ein Drehmoment, ein Motordrehmoment, eine Leistungsaufnahme, ein Strom, ein Druck und/oder eine Winkelgeschwindigkeit erfasst werden. Beispielsweise kann es sich bei der Modelleingangs-Messgröße um einen Winkel, eine Winkelbeschleunigung und/oder eine Winkelgeschwindigkeit und bei der Modellausgangs-Messgröße um ein Motordrehmoment handeln. Prinzipiell können die Messgrößen und/oder die Modelleingangs- und Modellausgangs-Messgrößen jedoch auch die gleichen Messgrößen, z.B. die Winkelgeschwindigkeit oder das Motordrehmoment darstellen.

Die Erfassung der wenigstens einen Modelleingangs-Messgröße und der wenigstens einen Modellausgangs-Messgröße kann die Erfassung wenigstens eines Signalabschnitts der wenigstens einen Modelleingangs-Messgröße und/oder der wenigstens einen Modellausgangs-Messgröße umfassen. Beispielsweise kann die Winkelgeschwindigkeit in einem bestimmten Zeitintervall oder während einer bestimmten Zeitdauer erfasst werden. Möglich ist auch die Erfassung in Abhängigkeit einer Zykluseigenschaft, z.B. eines Wegs oder einer Zeit, so dass sich ein Signalverlauf über den Weg oder die Zeit ergibt, innerhalb dem der Signalabschnitt vorgesehen ist.

Weiter können in der Signalerfassung 19 weitere Signalabschnitte der wenigstens einen Modelleingangs-Messgröße und/oder der wenigstens einen Modellausgangs-Messgröße, beispielsweise durch wenigstens eine mathematische Operation erzeugt werden. Beispielsweise kann die Winkelgeschwindigkeit der Achse 12 mit der Sensorik 14 erfasst werden und in der Signalerfassung 19 kann durch eine Ableitung der Winkelgeschwindigkeit nach der Zeit in einem Signalabschnitt die Beschleunigung der Winkelgeschwindigkeit erzeugt werden.

In einer modellbasierten Achsüberwachung 20 können in einer Modellerzeugung 22 die erfassten und/oder erzeugten Messgrößen zusammengefasst werden, beispielsweise zu einem Messvektor, einem Messskalar oder einem Messtensor. Beispielsweise kann die Winkelgeschwindigkeit und deren zeitliche Ableitung zu einem Messvektor zusammengefasst und das Motordrehmoment als ein Messskalar beschrieben werden. Beispielweise kann der Messvektor als Modelleingangs-Messgröße für den Modelleingang und der Messskalar als Modellausgangs-Messgröße für den Modellausgang verwendet werden.

Mit einer Parameterschätzung 26 wird der Modellparameter des Modells geschätzt bzw. angepasst und in einer Simulation 28 wenigstens eine zu erwartende Messgröße, z.B. ein zu erwartendes Motordrehmoment, mittels des geschätzten Modellparameters des Modells und der Messgröße simuliert. Werden z.B. in der Parameterschätzung 26 als Modelleingangs-Messgrößen eine Winkelgeschwindigkeit und/oder eine Winkelbeschleunigung und als Modellausgangs-Messgröße ein Motordrehmoment verwendet, ergeben sich z.B. als Modellparameter ein Trägheitsmoment, eine Dämpfung und/oder ein Störmoment. Mit den Modellparametern kann in der Simulation 28 wenigstens eine zu erwartende Messgröße, z.B. ein simuliertes Drehmoment simuliert werden. Das simulierte Drehmoment kann dann mit der Modellausgangs-Messgröße Motordrehmoment verglichen werden. Die Schätzung bzw. Anpassung kann bevorzugt in einem bestimmten Zeitintervall erfolgen, beispielsweise während des Betriebs der Maschine 102, z.B. in jedem Takt der Maschinensteuerung. Der Modellparameter wird entsprechend angepasst und ändert sich. In einer Prüfung 30 wird die Abweichung der wenigstens einen zu erwartenden Messgröße, z.B. das zu erwartende Motordrehmoment, von der wenigstens einen Modellausgangs-Messgröße, z.B. dem erfassten Motordrehmoment, mit wenigstens einem Schwellenwert verglichen. Beispielsweise kann zur Simulation der wenigstens einen zu erwartenden Messgröße die Modelleingangs-Messgröße, z.B. die Winkelgeschwindigkeit und/oder die Winkelbeschleunigung der Achse, verwendet und zum Vergleich der Abweichung der zu erwartenden Messgröße mit dem Schwellenwert die Modellausgangs-Messgröße, z.B. das Motordrehmoment der Achse verwendet werden. Vorteilhaft ergibt sich so eine verlässliche, präzise und robuste Fehlererkennung.

Prinzipiell kann aber auch die zu erwartende Messgröße direkt mit der (erfassten) Modellausgangs-Messgröße verglichen werden. Beispielsweise könnte das zu erwartende Motordrehmoment mit dem erfassten Motordrehmoment verglichen werden. Ergibt die Prüfung 30, dass der Schwellenwert überschritten wurde, kann wenigstens eine Aktion durchgeführt werden, beispielsweise kann wenigstens eine Diagnosedatei erzeugt werden und/oder es kann wenigstens eine Alarmmeldung 32 erfolgen, welche über einen Alarmhandler 34 ein Signal an einen Steuersignalgenerator 36 der Maschinensteuerung 10 ausgibt, welcher wiederum über den Bus 18 eine Aktorik 16 der Achse 12 betätigt. Beispielsweise kann so die Achse 12 in einen sicheren Zustand überführt werden.

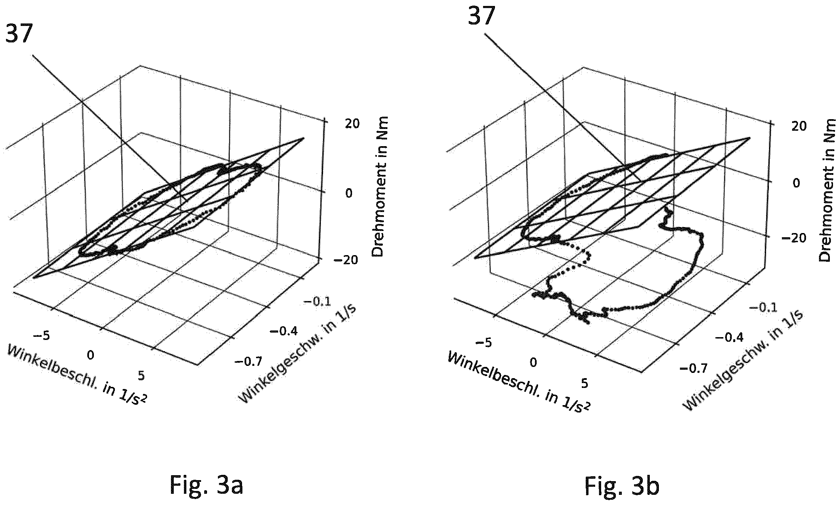

In Figur 3a und Figur 3b ist das Modell z.B. in Form einer Ebene 37 dargestellt. Erfasst und/oder erzeugt wurden in den Fig. 3a und 3b als Messgrößen die Winkelgeschwindigkeit, deren Ableitung bzw. deren Beschleunigung und das Motordrehmoment. Liegen z.B. die Messwerte des erfassten Drehmoments innerhalb der Ebene 37, läuft der Antrieb der Achse im Normalbetrieb (Fig. 3a). Wird die Ebene 37 verlassen, deutet dies z.B. auf einen Fehler im Antriebsstrang hin.

In einem weiteren bevorzugten Ausführungsbeispiel kann wenigstens eine Anpassung des Modellparameters erfolgen. Die Anpassung kann bevorzugt in einem bestimmten Zeitintervall erfolgen, beispielsweise während des Betriebs der Maschine 102, z.B. in jedem Takt der Maschinensteuerung. Der Modellparameter wird entsprechend angepasst und ändert sich. Das heißt, dass sich die Lage und Orientierung der Ebene aus den Figuren 3a und 3b über die Zeit verändern kann. Vorteilhaft kann somit eine schnelle und einfache Anpassung des Modells erfolgen.

In einem weiteren bevorzugten Ausführungsbeispiel wird der Modellparameter mit Null initialisiert, z.B. wenn die Maschine 102 gestartet wird.

In einem weiteren bevorzugten Ausführungsbeispiel kann das Modell linear vom Modellparameter **p** abhängen und/oder drei Parameter und einen skalaren Ausgang aufweisen:

$$y = \mathbf{p}^T\mathbf{x} \qquad\qquad \text{(Formel 1)}$$

$$\mathbf{x} = [\omega', \omega, 1]^T \qquad\qquad \text{(Formel 2)}$$

$$\mathbf{p} = [j, d, q]^T \qquad\qquad \text{(Formel 3)}$$

$$\tilde{y} = \tau \qquad\qquad \text{(Formel 4)}$$

Dabei bezeichnet z.B. **x** den Messvektor, ω die Winkelgeschwindigkeit des Antriebs, ω' die Ableitung der Winkelgeschwindigkeit bzw. die Beschleunigung, j das Trägheitsmoment, d die viskose Dämpfung, q die konstanten Störmomente (z.B. Gravitation), y den Modellausgang, $\tilde{y}$ die gemessene Ausgangsgröße und τ das (erfasste) Motordrehmoment. Die Parameter (j, d, q) bilden den Modellparameter p, z.B. einen Vektor. Die Verwendung des Modellparameters p kann z.B. durch Formel 1 festgelegt werden.

Die lineare Parameterabhängigkeit ermöglicht vorteilhaft das Aufstellen eines konvexen Optimierungsproblems zur Schätzung der Antriebsparameter:

$$\min_p \|y - Xp\|^2, \ p \in R^m, \ y \in R^n, \ X \in R^{n \times m} \quad \text{(Formel 5)}$$

Dabei gibt m die Anzahl der Parameter und n die Anzahl der Messsamples an. Die Zeilen der Messmatrix X bestehen dabei aus den Messvektoren x der Zeitschritte $k \in [1, ..., n]$. Im Vektor y liegen die gemessenen Ausgangsgrößen, z.B. $\tilde{y}$ für die Zeitschritte $k \in [1, ..., n]$.

Die analytische Lösung für die Formel 5 lautet:

$$\hat{p} = (X^T X)^{-1} X^T y \quad \text{(Formel 6)}$$

Um eine Anomalie zu erkennen, kann mit dem geschätzten Modellparameter $\hat{p}$ und den aktuellen Messdaten **x** ein Modellausgang $y = \hat{p}^T x$ simuliert werden. Anschließend kann die Abweichung $|y - \tilde{y}|$ mit einem Schwellenwert verglichen werden. Bei Überschreitung des Schwellenwerts löst die Fehlererkennung aus.

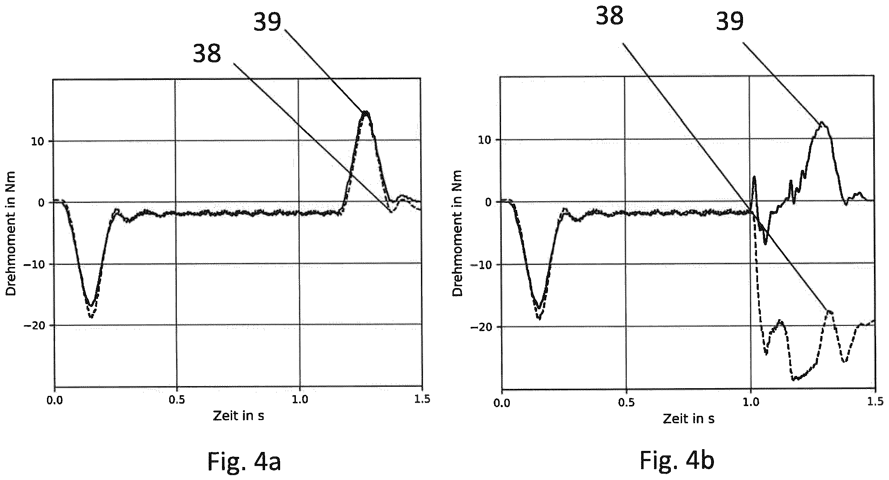

In den Figuren 4a und 4b sind jeweils der geschätzte Drehmomentverlauf 39 und der erfasste Drehmomentverlauf 38 über der Zeit für den Normalbetrieb (Fig. 4a) sowie den Anomalie-Fall (Fig. 4b) dargestellt. Für den Anomalie-Fall erkennt man eine deutliche Abweichung zwischen geschätztem und erfasstem Verlauf bereits schon nach sehr kurzer Zeit.

In einem weiteren bevorzugten Ausführungsbeispiel kann die Schätzung des Modellparameters rekursiv erfolgen und/oder kann für die Schätzung des Modellparameters ein Recursive-Least-Squares-Algorithmus verwendet werden.

Die rekursive Formulierung für den geschätzten Modellparameter bzw. von Gleichung 6 erlaubt die Anpassung des Modellparameters, z.B. in einem Steuerungstakt vorteilhaft ohne Zeitverzug:

$$\hat{p}_{k+1} = \hat{p}_k + ( C_k x_{k+1} / (\lambda + x_{k+1}^T C_k x_{k+1}) ) (y_{k+1} - x_{k+1}^T \hat{p}_k) \quad \text{(Formel 7)}$$

$$\text{mit } \lambda + x_{k+1}^T C_k x_{k+1} = \Gamma_k$$

$$C_{k+1} = 1/\lambda (C_k - \Gamma_k x_{k+1}^T C_k) \quad \text{(Formel 8)}$$

Befindet sich beispielsweise die Achse 12 über einer gewissen Geschwindigkeit, kann der Modellparameter p ständig über Formel 7 angepasst werden, sodass die Parameter j, d, q ständig genauer werden. Die Parameter j, d, q bzw. der Modellparameter p wird somit an die Umgebungsbedingungen angepasst.

Prinzipiell kann sowohl über Formel 6 als auch über Formel 7 der Modellparameter angepasst werden. Formel 7 beschreibt eine bevorzugte rekursive Formulierung von Formel 6. Der Unterschied zwischen Formel 6 und 7 besteht darin, dass für Formel 6 eine Messmatrix **X** verwendet wird, wohingegen bei Formel 7 ein Messvektor **x** verarbeitet werden kann. Um Formel 6 anzuwenden, können Messvektoren **x** der Achse 12 über einen gewissen Zeitraum, z.B. einige Sekunden, aufgezeichnet und in der Messmatrix **X** abgespeichert werden. Auf Basis dieser Messmatrix **X** kann dann der Modellparameter berechnet werden. Formel 7 hingegen erlaubt es vorteilhaft, die Modellparameter bevorzugt in jedem Steuerungstakt, z.B. alle zwei Millisekunden, auf Basis des aktuellen Messvektors **x** anzupassen, und benötigt keine Zwischenspeicherung der Messdaten. Dabei bezeichnet C die Kovarianzmatrix und λ den Vergessensfaktor. Die Eigenwerte der Kovarianzmatrix enthalten Information zur Unsicherheit der Parameter.

In einem bevorzugten Ausführungsbeispiel kann das Modell an wenigstens eine neue Umgebungsbedingung angepasst werden. Weiter kann über λ eingestellt werden, wie schnell sich das Modell an neue Umgebungsbedingungen anpasst. Z.B. kann über λ, welches z.B. typische Werte zwischen 0.9 und 1 annehmen kann, eingestellt werden, wie schnell sich das Modell an neue Umgebungsbedingungen anpasst. Je kleiner λ gewählt wird, desto stärker werden aktuelle Messgrößen, welche zeitlich neuer bzw. erst vor kurzem erfasst wurden, in der Anpassung des Modellparameters berücksichtigt.

In einem weiteren bevorzugten Ausführungsbeispiel gemäß Fig. 2 kann beispielsweise zunächst wenigstens ein Modell in dem Modellaufbau 24 bereitgestellt werden, beispielsweise ein dynamisches Modell des Antriebsstrangs gemäß den Formeln 1 - 4. Die modellbasierte Achsüberwachung 20 erfasst über die Sensorik 14 wenigstens eine Messgröße der Achse 12. Beispielsweise kann die Winkelgeschwindigkeit und das Motordrehmoment erfasst werden, wobei die Winkelgeschwindigkeit und deren zeitliche Ableitung in einem Messvektor x (Formel 2) und das Motordrehmoment als eine gemessene Ausgangsgröße $\tilde{y}$ (Formel 4) gespeichert werden. Mit der Bedingung gemäß Formel 5 und Formel 7 erfolgt eine Schätzung des Modellparameters. Formel 6 beschreibt eine Lösung von Formel 5, während Formel 7 eine rekursive Lösung darstellt.

In einem nächsten Schritt kann mittels des Messvektors x und der Ausgangsgröße y über die Formel 7 und 8 der Modellparameter angepasst werden. Mit dem angepassten Modellparameter und dem aktuellen Messvektor x wird dann eine Simulation $y = \hat{p}^T x$ (Formel 1) zum Erhalt einer zur erwartenden Messgröße, z.B. eines zu erwartenden Motordrehmoments, ausgeführt. Danach wird die simulierte zu erwartende Messgröße, z.B. das zu erwartende Motordrehmoment, mit der erfassten Ausgangsgröße y, dem erfassten Motordrehmoment, verglichen. Weichen die beiden Werte zu weit voneinander ab, wird wenigstens eine Aktion unternommen, z.B. wird ein Warnsignal ausgegeben, es wird ein Alarm ausgelöst, es wird ein Steuersignal für die Maschine generiert und/oder die Achse wird in einen sicheren Zustand überführt.

In einem weiteren bevorzugten Ausführungsbeispiel wird für die Simulation der Messvektor **x** nicht mit Messwerten, sondern mit Sollwerten befüllt. Damit ergibt sich beispielsweise ein Solldrehmoment auf Basis von einer Sollgeschwindigkeit und einer Sollbeschleunigung. Für die Schätzung des Modellparameters werden weiterhin Istwerte im Messvektor **x** verwendet.

In einem weiteren bevorzugten Ausführungsbeispiel erfolgt die Anpassung des Modells und/oder die Anpassung des wenigstens einen Modellparameters langsamer als die Fehlererkennung, beispielsweise um wenigstens eine Größenordnung oder um wenigstens eine Zehnerpotenz.

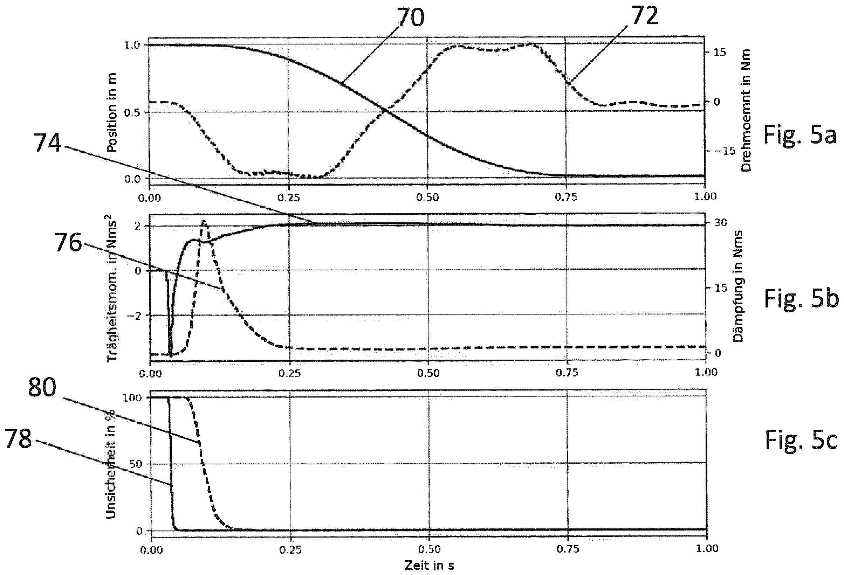

In einem weiteren bevorzugten Ausführungsbeispiel wird die Fehlererkennung erst ab einer gewissen Modellsicherheit aktiviert, um vorteilhaft Fehlauslösungen zu vermeiden. In den Figuren 5a-c ist das Einschwingverhalten des Modellparameters zu sehen, wenn die Achse einen Positioniervorgang (Fig. 5a) durchführt und der Modellparameter zuvor mit Null initialisiert wurde. In Fig. 5a ist die Position 70 und das Drehmoment 72 und in Fig. 5b die Trägheit 74 und die Dämpfung 76 über der Zeit aufgetragen. Fig. 5c zeigt die Unsicherheiten 78 bzw. 80 bzgl. der Trägheit bzw. der Dämpfung über der Zeit. Z.B. verschwindet die Unsicherheit in den Parametern des Trägheitsmoments und der Dämpfung (Fig. 5b) bei diesem Positioniervorgang bereits nach 200ms (Fig. 5c), da das System durch hinreichend viele Frequenzen angeregt wird.

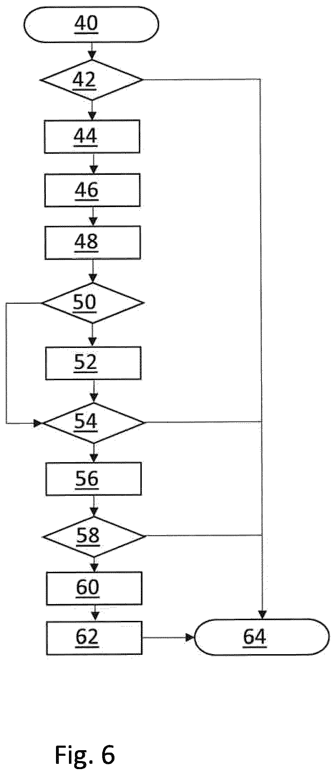

In Figur 6 ist ein Ablaufdiagramm eines weiteren bevorzugten Ausführungsbeispiels dargestellt. Nach einem Start 40 kann in einem optionalen Schritt 42 vorgesehen sein, dass zunächst überprüft wird, ob die Fehlererkennung aktiv ist. Ist dies nicht der Fall, kommt das Verfahren zu einem Ende 64.

Ist die Fehlererkennung aktiv, wird in einem Schritt 44 wenigstens ein Modell der Achse mit wenigstens einem Modellparameter bereitgestellt, wobei der Modellparameter z.B. das Trägheitsmoment, die viskose Dämpfung oder konstante Störmomente, wie zum Beispiel die Gravitation umfassen kann.

In einem Schritt 46 wird wenigstens eine Modelleingangs-Messgröße der Achse und wenigstens eine Modellausgangs-Messgröße der Achse, jeweils z.B. eine Drehzahl, ein Drehmoment, ein Motordrehmoment, eine Leistungsaufnahme, ein Strom, ein Winkel, eine Winkelbeschleunigung, eine Winkelgeschwindigkeit und/oder ein Druck erfasst.

In einem weiteren bevorzugten Ausführungsbeispiel kann in einem Schritt 48 wenigstens ein Signalabschnitt der wenigstens einen Modelleingangs-Messgröße und/oder Modellausgangs-Messgröße erfasst werden. In dem Schritt 48 kann in einem weiteren bevorzugten Ausführungsbeispiel auch wenigstens ein anderer Signalabschnitt der wenigstens einen Modelleingangs-Messgröße und/oder Modellausgangs-Messgröße durch wenigstens eine mathematische Operation, z.B. durch eine Differentiation, eine Ableitung und/oder eine Integration erzeugt werden.

Weiter kann in einem weiteren bevorzugten Ausführungsbeispiel in einem Schritt 50 überprüft werden, ob eine kritische Achsgeschwindigkeit der Achse überschritten wird. Wird die kritische Achsgeschwindigkeit nicht überschritten, erfolgt bevorzugt keine Schätzung des wenigstens einen Modellparameters gemäß einem Schritt 52.

Wird die kritische Achsgeschwindigkeit überschritten, erfolgt die Schätzung des wenigstens einen Modellparameters in einem weiteren bevorzugten Ausführungsbeispiel gemäß dem Schritt 52, beispielsweise anhand von den Formeln 5 - 8.

In einem weiteren Schritt 54 kann in einem weiteren bevorzugten Ausführungsbeispiel wenigstens eine Modellsicherheit des wenigstens einen Modells der Achse überprüft werden. Beispielweise kann die Modellsicherheit mittels eines Unsicherheitsparameters dargestellt werden, welcher beispielsweise einen bestimmten Wert annehmen oder überschreiten muss. Zudem kann in dem Schritt 54 überprüft werden, ob die Schätzung des Modellparameters bereits schon eine kritische Zeit aktiv war, z.B. für eine Zeitspanne von 200ms. Ist die Modellsicherheit nicht ausreichend, kommt das Verfahren zum Ende 64.

Ist die Modellsicherheit ausreichend, z.B. wenn die Unsicherheit klein genug und die Schätzung des Modellparameters lange genug aktiv war, wird in einem Schritt 56 wenigstens eine Simulation wenigstens einer zu erwartenden Messgröße mittels des geschätzten Modellparameters des Modells und der Modelleingangs-Messgröße durchgeführt, beispielsweise anhand von Formel 1.

In einem Schritt 58 wird die Abweichung der zu erwartenden Messgröße von der Modellausgangs-Messgröße mit wenigstens einem Schwellenwert verglichen. Wird der Schwellenwert beispielsweise nicht überschritten, kommt das Verfahren zum Ende 64. Wird der Schwellenwert beispielsweise überschritten, wird in einem weiteren bevorzugten Ausführungsbeispiel in einem Schritt 60 wenigstens eine Aktion durchgeführt, z.B. wird wenigstens ein Steuersignal für die Maschine generiert, wobei durch das Steuersignal die Achse der Maschine in eine sichere Position überführt werden kann.

In einem weiteren bevorzugten Ausführungsbeispiel kann in einem Schritt 62 wenigstens eine Diagnosedatei erzeugt werden. Die Diagnosedatei kann beispielsweise die zeitlichen Verläufe der Messgrößen, der Signalabschnitte und/oder der Parameter umfassen. Die Diagnosedatei kann zudem noch weitere Informationen bezüglich der Maschine oder des aufgetretenen Fehlers umfassen und beispielsweise direkt auf der Maschine oder in einem Netzwerk verfügbar gemacht werden.

In einem weiteren bevorzugten Ausführungsbeispiel wird die Überprüfung der wenigstens einen Modellsicherheit anhand der Bestimmung der Eigenwerte einer Kovarianzmatrix durchgeführt.

In einem weiteren bevorzugten Ausführungsbeispiel wird für die Schätzung des wenigstens einen Modellparameters die wenigstens eine Modelleingangs-Messgröße und/oder die wenigstens eine Modellausgangs-Messgröße verwendet.

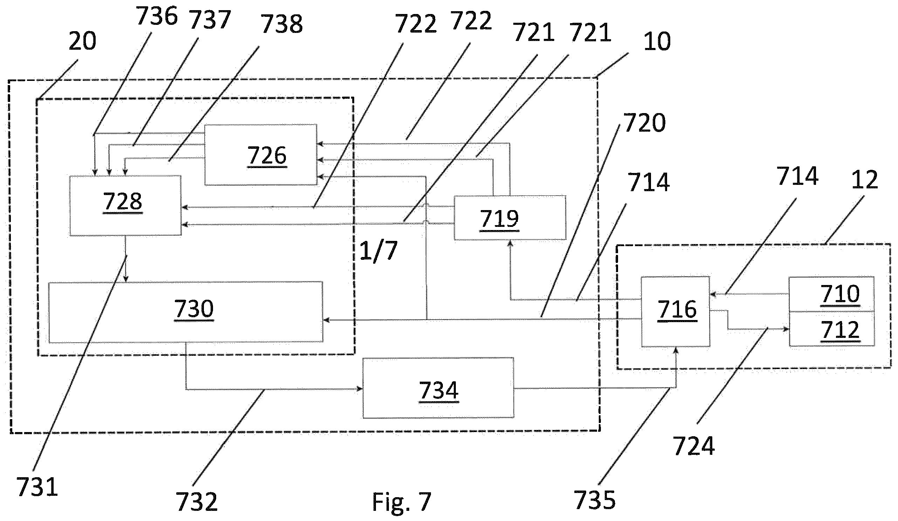

In einem weiteren bevorzugten Ausführungsbeispiel gemäß Figur 7 ist ein Blockdiagramm dargestellt. Die Achse 12 weist dort einen Elektromotor 712 und einen Umrichter 716 sowie einen Winkelsensor 710 auf. Prinzipiell kann die Achse 12 weitere Elemente und Sensoren, z.B. Drehzahl-, Spannungs-, Strom- und/oder Leistungssensoren umfassen. Der Winkelsensor 710 liest einen Winkel 714 aus dem Elektromotor 712 aus und sendet den Winkel 714 an die Maschinensteuerung 10. Weiter wird ein Drehmoment 720 erfasst, welches z.B. aus den Phasenströmen des Elektromotors 712 mittels des Umrichters 716 errechnet wird. Das Drehmoment 720 wird ebenfalls an die Maschinensteuerung 10 gesendet.

In einem Differenzierer 719 wird der Winkel 714 differenziert, vorzugsweise zweifach differenziert, wodurch sich eine Winkelbeschleunigung 721 und eine Winkelgeschwindigkeit 722 ergeben. Prinzipiell können jedoch auch andere Messgrößen mit Hilfe der Sensoren erhalten werden. Die Winkelbeschleunigung 721 und die Winkelgeschwindigkeit 722 werden zusammen mit dem Drehmoment 720 an einen Parameterschätzer 726 in der modellbasierten Achsüberwachung 20 gesendet. Der Parameterschätzer 726 schätzt mit Hilfe der obigen Gleichungen 7 und 8, vorzugsweise mit Hilfe von wenigstens einem Algorithmus, z.B. eines RLS-Algorithmus, verschiedene Modellparameter. Im Ausführungsbeispiel in Figur 7 sind dies ein Trägheitsmoment 736, eine Dämpfung 737 und/oder ein Störmoment 738. Dabei wird in einem weiteren bevorzugten Ausführungsbeispiel auch eine Unsicherheit dieser Modellparameter ermittelt, wobei die geschätzten Modellparameter erst dann verwendet werden, wenn die Parameterunsicherheit klein genug ist.

Mit den geschätzten Modellparametern (im Ausführungsbeispiel in Figur 7: das Trägheitsmoment 736, die Dämpfung 737 und/oder das Störmoment 738) wird in einer Simulation 728, z.B. einer Dynamiksimulation, ein simuliertes Drehmoment 731 ermittelt, welches in einer Prüfung 730, z.B. einer Schwellenwertprüfung mit dem (gemessenen) Drehmoment 720 verglichen wird. Weichen Drehmoment 720 und simulierte Drehmoment 731 zu weit voneinander ab, wird ein Signal 732, z.B. ein Alarmsignal an eine Bahnplanungs-CNC 734 der Maschinensteuerung 10 gesendet, welche z.B. einen Sollwinkel 735 an den Umrichter 716 sendet, um so die Achse 10 z.B. abzubremsen oder zu stoppen.

**Bezugszeichenliste**

| | | | |
|---|---|---|---|
| 10 | Maschinensteuerung | 76 | Dämpfung |
| 12 | Achse | 78 | Unsicherheit |
| 14 | Sensorik | 80 | Unsicherheit |
| 16 | Aktorik | 102 | Maschine |
| 18 | Bus | 104 | Riemen |
| 19 | Signalerfassung | 106 | Umlenkrolle |
| 20 | Modellbasierte Achsüberwachung | 108 | Erfassungseinheit |
| 22 | Modellerzeugung | 110 | Antriebsteuerung |
| 24 | Modellaufbau | 112 | Kommunikationsschnittstelle |
| 26 | Parameterschätzung | 114 | Richtung |

(fortgesetzt)

| | | | |
|---|---|---|---|
| 28 | Simulation | 116 | Achse |
| 30 | Prüfung | 118 | Datenspeicher |
| 32 | Alarm-Meldung | 120 | Maschinensteuerung |
| 34 | Alarm-Handler | 710 | Winkelsensor |
| 36 | Steuersignalgenerator | 712 | Elektromotor |
| 37 | Ebene | 714 | Winkel |
| 38 | erfasster Drehmomentverlauf | 716 | Umrichter |
| 39 | geschätzter Drehmomentverlauf | 719 | Differenzierer |
| 40 | Start | 720 | Drehmoment |
| 42 | Schritt | 721 | Winkelbeschleunigung |
| 44 | Schritt | 722 | Winkelgeschwindigkeit |
| 46 | Schritt | 724 | Phase |
| 48 | Schritt | 726 | Parameterschätzer |
| 50 | Schritt | 728 | Simulation |
| 52 | Schritt | 730 | Prüfung |
| 54 | Schritt | 731 | simuliertes Drehmoment |
| 56 | Schritt | 732 | Signal |
| 58 | Schritt | 734 | Bahnplanungs-CNC |
| 60 | Schritt | 735 | Sollwinkel |
| 62 | Schritt | 736 | Trägheitsmoment |
| 64 | Ende | 737 | Dämpfung |
| 70 | Position | 738 | Störmomente |
| 72 | Drehmoment | | |
| 74 | Trägheit | | |

**Patentansprüche**

1. Verfahren zur Fehlererkennung einer Ist-Position einer Achse einer Maschine zur Handhabung und/oder Verarbeitung von plastifizierbaren Materialien, insbesondere einer Spritzgießmaschine, aufweisend die folgenden Schritte:

   - Bereitstellung wenigstens eines Modells der Achse mit wenigstens einem Modellparameter,

   **gekennzeichnet durch** die Schritte:

   - Erfassung wenigstens einer Modelleingangs-Messgröße und wenigstens einer Modellausgangs-Messgröße der Achse,
   - Schätzung des wenigstens einen Modellparameters des wenigstens einen Modells,
   - Simulation wenigstens einer zu erwartenden Messgröße mittels des geschätzten Modellparameters des Modells und der erfassten wenigstens einen Modelleingangs-Messgröße,
   - Vergleich der Abweichung der zu erwartenden Messgröße von der erfassten wenigstens einen Modellausgangs-Messgröße mit wenigstens einem Schwellenwert,
   - Ausführung wenigstens einer Aktion bei einer Überschreitung des Schwellenwerts.

2. Verfahren nach Anspruch 1, **dadurch gekennzeichnet, dass** sich die wenigstens eine Modelleingangs-Messgröße von der wenigstens einen Modellausgangs-Messgröße unterscheidet.

3. Verfahren nach einem der vorhergehenden Ansprüche, **dadurch gekennzeichnet, dass** für die Erfassung der wenigstens einen Modelleingangs-Messgröße und/oder Modellausgangs-Messgröße wenigstens ein Signalabschnitt der wenigstens einen Modelleingangs-Messgröße und/oder Modellausgangs-Messgröße erfasst wird.

4. Verfahren nach einem der vorhergehenden Ansprüche, **dadurch gekennzeichnet, dass** durch wenigstens eine mathematische Operation wenigstens ein anderer Signalabschnitt der wenigstens einen Modelleingangs-Messgröße und/oder Modellausgangs-Messgröße erzeugt wird.

**5.** Verfahren nach einem der vorhergehenden Ansprüche, **dadurch gekennzeichnet, dass** wenigstens eine Anpassung des wenigstens einen Modells und/oder des wenigstens einen Modellparameters erfolgt.

**6.** Verfahren nach einem der vorhergehenden Ansprüche, **dadurch gekennzeichnet, dass** das wenigstens eine Modell linear vom wenigstens einen Modellparameter abhängt.

**7.** Verfahren nach einem der vorhergehenden Ansprüche, **dadurch gekennzeichnet, dass** bei einer Überschreitung des wenigstens einen Schwellenwerts wenigstens eine Diagnosedatei erzeugt wird.

**8.** Verfahren nach einem der vorhergehenden Ansprüche, **dadurch gekennzeichnet, dass** wenigstens eine Überschreitung einer kritischen Achsgeschwindigkeit der Achse und/oder dass wenigstens eine Modellsicherheit des wenigstens einen Modells der Achse überprüft wird.

**9.** Verfahren nach Anspruch 8, **dadurch gekennzeichnet, dass** die Überprüfung der wenigstens einen Modellsicherheit anhand der Bestimmung der Eigenwerte einer Kovarianzmatrix durchgeführt wird.

**10.** Verfahren nach einem der vorhergehenden Ansprüche, **dadurch gekennzeichnet, dass** überprüft wird, ob die Schätzung des wenigstens einen Modellparameters wenigstens für eine kritische Zeit aktiv war.

**11.** Verfahren nach einem der vorhergehenden Ansprüche, **dadurch gekennzeichnet, dass** das Modell und/oder der wenigstens eine Modellparameter an wenigstens eine Umgebungsbedingung angepasst wird.

**12.** Verfahren nach einem der Ansprüche 5 bis 11, **dadurch gekennzeichnet, dass** die Anpassung des Modells und/oder die Anpassung des wenigstens einen Modellparameters langsamer als die Fehlererkennung stattfindet.

**13.** Verfahren nach einem der vorhergehenden Ansprüche, **dadurch gekennzeichnet, dass** zur Schätzung des wenigstens einen Modellparameters die wenigstens eine Modelleingangs-Messgröße und/oder die wenigstens eine Modellausgangs-Messgröße verwendet wird.

**14.** Fehlererkennungsvorrichtung, **dadurch gekennzeichnet, dass** sie eingerichtet, ausgeführt und/oder konstruiert ist, um das Verfahren nach einem der Ansprüche 1 bis 13 auszuführen.

**15.** Computerprogrammprodukt mit einem Programmcode, der auf einem Computer lesbaren Medium gespeichert ist, gekennzeichnet zur Durchführung des Verfahrens nach einem der Ansprüche 1 bis 13.

**Claims**

**1.** A method for detecting an error in the actual position of an axle of a machine for handling and/or processing plastifiable materials, in particular an injection moulding machine, said method comprising the following steps:

- providing at least one model of the axle, comprising at least one model parameter, **characterised by** the steps of:

- detecting at least one model input measurement variable and at least one model output measurement variable of the axle,
- estimating the at least one model parameter of the at least one model,
- simulating at least one expected measurement variable by means of the estimated model parameter of the model and the detected at least one model input measurement variable,
- comparing the deviation of the expected measurement variable from the detected at least one model output measurement variable with at least one threshold, and
- if the threshold is exceeded, carrying out at least one action.

**2.** A method in accordance with claim 1, **characterised in that** the at least one model input measurement variable differs from the at least one model output measurement variable.

**3.** A method in accordance with one of the preceding claims, **characterised in that**, for the detection of the at least one model input measurement variable and/or model output measurement variable, at least one signal portion of the at least one model input measurement variable and/or model output measurement variable is detected.

4. A method in accordance with one of the preceding claims, **characterised in that** at least one mathematical operation is used to generate at least one other signal portion of the at least one model input measurement variable and/or model output measurement variable.

5. A method in accordance with one of the preceding claims, **characterised in that** at least one adjustment is made to the at least one model and/or the at least one model parameter.

6. A method in accordance with one of the preceding claims, **characterised in that** the at least one model is linearly dependent on the at least one model parameter.

7. A method in accordance with one of the preceding claims, **characterised in that**, if the at least one threshold is exceeded, at least one diagnostic file is generated.

8. A method in accordance with one of the preceding claims, **characterised in that** at least one instance of a critical axle speed of the axle being exceeded is checked, and/or **in that** at least one model certainty of the at least one model of the axle is checked.

9. A method in accordance with claim 8, **characterised in that** the checking of the at least one model certainty is performed on the basis of the determination of the eigenvalues of a covariance matrix.

10. A method in accordance with one of the preceding claims, **characterised in that** it is checked whether the estimation of the at least one model parameter was active at least for a critical time.

11. A method in accordance with one of the preceding claims, **characterised in that** the model and/or the at least one model parameter is adjusted to at least one ambient condition.

12. A method in accordance with one of the claims 5 to 11, **characterised in that** the adjustment of the model and/or the adjustment of the at least one model parameter takes place more slowly than the error detection.

13. A method in accordance with one of the preceding claims, **characterised in that** the at least one model input measurement variable and/or the at least one model output measurement variable is used for the estimation of the at least one model parameter.

14. An error detection device, **characterised in that** it is set up, configured and/or constructed to carry out the method in accordance with one of the claims 1 to 13.

15. A computer program product with a program code that is stored on a computer-readable medium, characterised to carry out the method in accordance with one of the claims 1 to 13.

**Revendications**

1. Procédé de reconnaissance d'erreur d'une position réelle d'un axe d'une machine pour la manipulation et/ou la transformation de matériaux plastifiables, en particulier d'une machine de moulage par injection, comprenant les étapes suivantes :

   - mise à disposition d'au moins un modèle de l'axe ayant au moyen paramètre de modèle, **caractérisé par** les étapes suivantes :

      - enregistrement d'au moins une grandeur de mesure d'entrée du modèle et d'au moins une grandeur de mesure de sortie de modèle de l'axe,
      - évaluation du ou des paramètre(s) de modèle du ou des modèle(s),
      - simulation d'au moins une grandeur de mesure attendue au moyen du paramètre de modèle évalué du modèle et de la ou des grandeur(s) de mesure d'entrée de modèle enregistrée(s),
      - comparaison de la déviation de la grandeur de mesure attendue par rapport à la ou les grandeur(s) de mesure de sortie de modèle enregistrées avec au moins une valeur seuil,

- exécution d'au moins une action en cas de dépassement de la valeur seuil.

2. Procédé selon la revendication 1, **caractérisé en ce que** la ou les grandeur(s) de mesure d'entrée de modèle se différencient de la ou des grandeur(s) de mesure de sortie de modèle.

3. Procédé selon l'une des revendications précédentes, **caractérisé en ce que** pour l'enregistrement de la ou des grandeur(s) de mesure d'entrée de modèle et/ou de la ou des grandeur(s) de mesure de sortie de modèle, au moins un segment de signal de la ou des grandeur(s) de mesure d'entrée de modèle et/ou de la grandeur de mesure de sortie de modèle est enregistré.

4. Procédé selon l'une des revendications précédentes, **caractérisé en ce qu'**au moyen d'au moins une opération mathématique, au moins un autre segment de signal de la ou des grandeur(s) de mesure d'entrée de modèle et/ou de la ou des grandeur(s) de mesure de sortie de modèle est produit.

5. Procédé selon l'une des revendications précédentes, **caractérisé en ce qu'**au moins une adaptation du ou des modèle(s) et/ou du ou des paramètre(s) de modèle a lieu.

6. Procédé selon l'une des revendications précédentes, **caractérisé en ce que** le ou les modèle(s) dépend(ent) linéairement d'au moins un paramètre de modèle.

7. Procédé selon l'une des revendications précédentes, **caractérisé en ce qu'**en cas de dépassement de la ou des valeur(s) seuil, au moins un fichier de données est produit.

8. Procédé selon l'une des revendications précédentes, **caractérisé en ce qu'**au moins un dépassement d'une vitesse critique de l'axe est vérifiée et/ou **en ce qu'**au moins une sécurité de modèle du ou des modèle(s) de l'axe est vérifiée.

9. Procédé selon la revendication 8, **caractérisé en ce que** la vérification du ou des sécurité(s) de modèle est exécutée à l'aide de la détermination des valeurs propres d'une matrice de covariance.

10. Procédé selon l'une des revendications précédentes, **caractérisé en ce qu'**il est vérifié si l'estimation du ou des paramètre(s) de modèle est actif au moins pour une durée critique.

11. Procédé selon l'une ou plusieurs des revendications précédentes, **caractérisé en ce que** le modèle et/ou le ou les paramètre(s) de modèle est adapté à au moins une condition de l'environnement.

12. Procédé selon l'une des revendications 5 à 11, **caractérisé en ce que** l'adaptation du modèle et/ou l'adaptation du ou des paramètre(s) de modèle a lieu plus lentement que la reconnaissance d'erreur.

13. Procédé selon l'une des revendications précédentes, caractérisé en ce pour l'évaluation du ou des paramètre(s) de modèle, la ou les grandeur(s) de mesure d'entrée de modèle et/ou la ou les grandeur(s) de mesure de sortie de modèle est/sont utilisée(s).

14. Dispositif de reconnaissance d'erreur, **caractérisé en ce qu'**il est configuré, mis en oeuvre et/ou construit, pour mettre en oeuvre le procédé selon l'une des revendications 1 à 13.

15. Produit à programme d'ordinateur comportant un code programme qui est stocké sur un support lisible par un ordinateur, caractérisé pour la mise en oeuvre du procédé selon l'une des revendications 1 à 13.

Fig. 1

EP 4 381 361 B1

Fig. 2

EP 4 381 361 B1

Fig. 3a

Fig. 3b

Fig. 4b

Fig. 4a

Fig. 5a

Fig. 5b

Fig. 5c

Fig. 6

Fig. 7

1/7

EP 4 381 361 B1

22

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008045330 A1
- US 20180210436 A1
- DE 102011116153 A1
- EP 3617826 A1
- EP 3667446 A1
- EP 3540546 A1